# EUROPEAN PATENT SPECIFICATION

(11) **EP 4 167 027 B1**
(45) Date of publication and mention of the grant of the patent: **21.10.2026**
(21) Application number: 21205892.9
(22) Date of filing: 02.11.2021
(51) Int. Cl.: G03B 17/14, G03B 3/00

(54) **METHOD AND SYSTEM FOR ACQUIRING OPERATING PARAMETERS OF PHOTOGRAPHIC LENS**
VERFAHREN UND SYSTEM ZUR ERFASSUNG VON BETRIEBSPARAMETERN EINER PHOTOGRAPHISCHEN LINSE
PROCÉDÉ ET SYSTÈME POUR ACQUÉRIR DES PARAMÈTRES DE FONCTIONNEMENT D'UNE LENTILLE PHOTOGRAPHIQUE

(30) Priority: 12.10.2021 CN 202111188430
(43) Date of publication of application: 19.04.2023
(73) Proprietor: Shenzhen Dongzhen Optical Technology Co., Ltd, Longgang District Shenzhen Guangdong (CN)
(72) Inventor: PAN, YiQiang, Shenzhen, Guangdong (CN); LI, Hao, Shenzhen, Guangdong (CN); XU, Yi, Shenzhen, Guangdong (CN); YAO, SongJian, Shenzhen, Guangdong (CN); LI, JieMing, Shenzhen, Guangdong (CN); ZHANG, Bin, Shenzhen, Guangdong (CN)
(74) Representative: Viering, Jentschura & Partner mbB Patent- und Rechtsanwälte

(56) References cited:
- CN-A- 103 595 979
- VITA-FINZI CLAUDIO: "D5000 User's Manual", 1 January 2008 (2008-01-01), Dordrecht, pages 1 - 256, XP055906461, ISBN: 978-1-4020-6881-2, Retrieved from the Internet <URL:https://download.nikonimglib.com/archive2/g6D0Q00T0f9X01ry55251BuilR42/D5000_EU(En)04.pdf> [retrieved on 20220329], DOI: 10.1007/978-1-4020-6881-2

## Description

### TECHNICAL FIELD

The present invention relates to the technical field of photographic lens parameter acquisition.

### BACKGROUND

In the field of photography technologies, a lens is either referred to as a photographic lens used in a camera or referred to as an image fragment that is photographed by a camera after turning it on until turning it off. The image fragment is a basic unit of film and television creation. The technique of photographing the image fragment directly affects the difficulty of post-production of film and television works and the final picture effect. In fact, the technique of photographing the image fragment is realized ultimately by depending on the operation of the camera and the photographic lens.

Generally, in the photography process, various operating parameters of the photographic lens are set according to the expected picture effects, including but not limited to: a zoom parameter, a focus parameter, an aperture parameter, and the like. The operating parameters need to be recorded, so that, on the one hand, a consistent picture effect is obtained by using the same parameters during repeated photography. On the other hand, the parameters are used as reference data for post-processing, to provide the equipment with the operating parameters of the photographic lens.

In the photography process, the operating parameters of the photographic lens are recorded, as references in the photography process or post-processing, in the memo or the body of the photographic lens in a relatively elementary means of using paper and pens or pasting a tape mark. Obviously, such a means is excessively cumbersome.

With the continuous development of digital information technologies, a variety of photographic lenses that obtain, by calculating self-imaging data, and record operating parameters such as a zoom parameter, a focus parameter, and an aperture parameter are innovated in the related art. However, communication protocols used by different brands of photographic lenses are not fully disclosed. Special equipment must be used for docking to store data. It is difficult to obtain visual and readable data independent of image data. For example, the "PHOTOGRAPHY PARAMETER RECORDING DEVICE, PHOTOGRAPHY METHOD, AND EDITING SYSTEM" disclosed by the Chinese Utility Model with the patent number CN1052129C is one of the solutions.

CN 103 595 979 A describes an image processing apparatus comprising a generating unit configured to generate a value obtained when an image is captured with a second setting value by using a plurality of captured image data obtained by the image capturing device compositing image data, the second setting value being different from a first setting value used when capturing an image with the image capturing device capable of capturing image data based on a plurality of viewpoint positions, and the image capturing apparatus includes an operation unit for setting a setting value of an image capturing parameter, and wherein the first setting value and the second setting value are set via an operation unit.

XP055906461 discloses a method for acquiring operating parameters of a photographic lens, wherein operating parameters including optical parameters and motion parameters are acquired, encapsulated, stored and transmitted in real time to a camera or an external data reading device.

### SUMMARY

The present invention aims to provide a method for acquiring operating parameters of a photographic lens, to digitally acquire and record the operating parameters of the photographic lens with preferable compatibility and high precision.

In the present invention, the following technical solution is used for achieving the foregoing objective.

A method for acquiring operating parameters of a photographic lens according to independent claim 1.

According to the method for acquiring operating parameters of a photographic lens, the present invention further provides a system for acquiring operating parameters of a photographic lens according to independent claim 2.

A system for acquiring operating parameters of a photographic lens includes a control circuit and a storage unit that are configured in the photographic lens, where the control circuit includes a processing unit and a focusing ring position sensor, a zoom ring position sensor, an aperture ring position sensor, an accelerometer, a gyro sensor, a communication interface, a power connector that are connected to the processing unit; the control circuit acquires an operating parameter of the photographic lens by using the focusing ring position sensor, the zoom ring position sensor, the aperture ring position sensor, the accelerometer and the gyro sensor, performs data encapsulation on the operating parameter, and writes the encapsulated parameter into the storage unit; and the control circuit is further connected to a camera or an external data reading device by using the communication interface, to output the operating parameter after the data encapsulation in real time; and the control circuit further includes a temperature and humidity sensor connected to the processing unit, and a barometer connected to the processing unit.

In the system for acquiring operating parameters of a photographic lens, the focusing ring position sensor, the zoom ring position sensor, and the aperture ring position sensor each include a ring circuit board attached to a lens body in the photographic lens, and the ring circuit boards are connected to the processing unit; two carbon film resistors are provided on the ring circuit board, the carbon film resistors are set in a fan ring concentrically aligned with the ring circuit board, and the two carbon film resistors are provided in parallel and spaced apart in the same fan sector of the ring circuit board; the focusing ring position sensor, the zoom ring position sensor, and the aperture ring position sensor include short-circuit electrodes correspondingly attached to the focusing ring, the zoom ring, and the aperture ring in the photographic lens, and the short-circuit electrode is provided with two elastic members; the elastic members of the short-circuit electrodes in the focusing ring position sensor, the zoom ring position sensor, and the aperture ring position sensor are in elastic contact with the carbon film resistors on the ring circuit boards in a one-to-one correspondence, and the elastic members slide along circumferences of the carbon film resistors; and when the focusing ring, the zoom ring, and the aperture ring of the photographic lens rotate, the two carbon film resistors on the ring circuit board are configured, by using the short-circuit electrodes, as varistors connected to the processing unit.

Compared with the related art, the present invention has beneficial effects:
(1) In the photographic lens, the control circuit acquires, stores, and outputs operating parameters of the photographic lens, which is independently of the image data with good compatibility and high precision.
(2) The acquired and stored operating parameters of the photographic lens are not limited to optical parameters of a focus, a zoom, and an aperture, and further include but are not limited to motion parameters of a position and a posture, to provide increasing full data guidance in the photography process and the post-processing.
(3) Real-time operating parameters of the photographic lens are provided for the camera or an external data reading device connected to the photographic lens.

The present invention is further described below with reference to accompanying drawings and specific implementations.

### BRIEF DESCRIPTION OF THE DRAWINGS

- FIG. 1 is a block diagram of a principle of a method for acquiring operating parameters of a photographic lens according to the present invention.
- FIG. 2 is a logic block diagram of a system for acquiring operating parameters of a photographic lens according to the present invention.
- FIG. 3 is an electrical principal diagram of the system for acquiring operating parameters of a photographic lens according to the present invention.
- FIG. 4 is a schematic structural diagram of a ring circuit board in the system for acquiring operating parameters of a photographic lens according to the present invention.
- FIG. 5 is a schematic diagram of use reference of the system for acquiring operating parameters of a photographic lens according to the present invention.

### DETAILED DESCRIPTION OF EMBODIMENTS

An implementation of a method for acquiring operating parameters of a photographic lens according to the present invention includes: acquiring in the photographic lens, by a control circuit, an operating parameter of a photographic lens, performing data encapsulation, by the control circuit, on the operating parameter of the photographic lens, writing the encapsulated parameter into a storage unit, and transmitting the encapsulated parameter to the camera or an external data reading device in real time, where the acquiring, by a control circuit, an operating parameter of a photographic lens at least includes:
(1) obtaining, by the control circuit, electrical signals corresponding to current positions of a focusing ring, a zoom ring, and an aperture ring respectively during rotations, to convert the electrical signals into optical parameters of a focus, a zoom, and an aperture; and
(2) obtaining, by the control circuit, an electrical signal corresponding to a current pose of the photographic lens when the pose of the photographic lens changes, to convert the electrical signal into motion parameters including but not limited to a position parameter and a posture parameter.

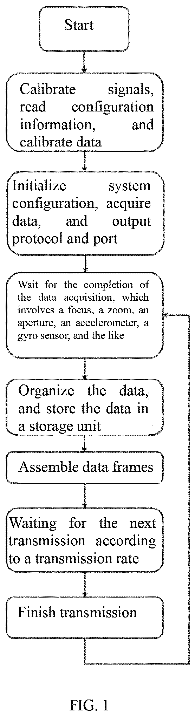

The principle of the method for acquiring operating parameters of a photographic lens according to the present invention is shown in FIG. 1. In the forgoing implementation, in the photographic lens, the control circuit acquires, stores, and outputs operating parameters of the photographic lens, which is independently of the image data with good compatibility and high precision. The acquired and stored operating parameters of the photographic lens are not limited to optical parameters of a focus, a zoom, and an aperture, and further include but are not limited to motion parameters of a position and a posture, to provide increasing full data guidance in the photography process and the post-processing. Real-time operating parameters of the photographic lens are provided for the camera or an external data reading device connected to the photographic lens.

In the method according to the present invention, the collecting, by a control circuit, an operating parameter of a photographic lens further includes: obtaining, by the control circuit, electrical signals corresponding to an internal temperature and humidity of the photographic lens, to convert the electrical signals into current internal environment parameters of the photographic lens. The acquired internal environment parameters of the photographic lens can be used to monitor the internal temperature and humidity of the photographic lens in real time, to prevent the lens from being exposed to relatively high humidity for a long time to produce mold, which affects the optical quality and the internal structure, and can also provide a temperature basis of temperature compensation algorithm correction for the control circuit, so that the accuracy of data acquisition is increasing high.

The collecting, by a control circuit, an operating parameter of a photographic lens further includes: obtaining, by the control circuit, an electrical signal corresponding to an external environment air pressure of the photographic lens, to convert the electrical signal into current external environment parameter of the photographic lens. The acquired external environment parameters of the photographic lens can provide a record of the current environment air pressure for photography such as photography in a storm or under air pressure of a real environment, which can be later connected to digital cinemas to provide audiences when watching movies with a higher-dimensional on-site observation experience.

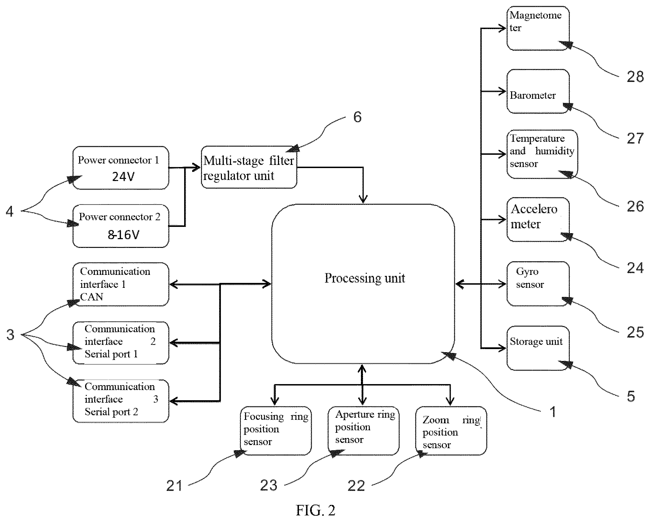

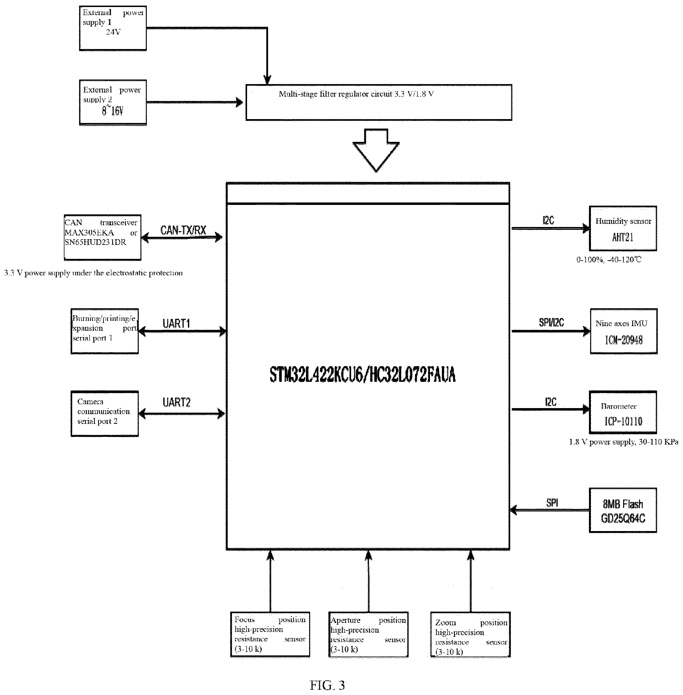

As shown in FIG. 2 and FIG. 3, the present invention provides the method for acquiring operating parameters of a photographic lens with a hardware solution as follows.

The system for acquiring operating parameters of a photographic lens includes: a control circuit and a storage unit that are configured in the photographic lens, where the control circuit includes a processing unit 1 and a focusing ring position sensor 21, a zoom ring position sensor 22, an aperture ring position sensor 23, an accelerometer 24, a gyro sensor 25, a communication interface 3, a power connector 4 that are connected to the processing unit 1; the control circuit acquires an operating parameter of the photographic lens by using the focusing ring position sensor 21, the zoom ring position sensor 22, the aperture ring position sensor 23, the accelerometer 24 and the gyro sensor 25, performs data encapsulation on the operating parameter, and writes the encapsulated parameter into the storage unit 5; and the control circuit is further connected to a camera or an external data reading device by using the communication interface 3, to output the operating parameter after the data encapsulation in real time.

In the foregoing implementation of the system for acquiring operating parameters of a photographic lens according to the present invention, a hardware basis is constructed in the photographic lens to acquire the operating parameters of the photographic lens.

The focusing ring position sensor 21, the zoom ring position sensor 22, the aperture ring position sensor 23 are used for obtaining information about positions of the focusing ring, the zoom ring, and the aperture ring in the photographic lens, to ensure optical parameters of the focus, the zoom, and the aperture. The accelerometer 24 and the gyro sensor 25 are used for obtaining position changes and posture information of the photographic lens to ensure motion parameters of a position and a posture. The communication interface 3 is used for supporting the control circuit to be connected to a camera or an external data reading device, thereby outputting encapsulated operating parameters in real time to the camera or the external data reading device.

As shown in FIG. 2 and FIG. 3, the communication interface 3 may include a plurality of CAN bus interfaces and serial ports, to be flexibly compatible with the storage unit integrated with the camera and an external storage unit. The example in which the communication interface 3 includes CAN bus interfaces is used. The control circuit, by using a data cable, is connected to an external storage unit such as a data storage box that provides a TF card to read and write FATFS files. An estimated storage rate of such a box is 8-20 M/hour, and one card with 128 GB is estimated to store at least 8000-h data.

The control circuit further includes a temperature and humidity sensor 26 connected to the processing unit 1, thereby obtaining electrical signals corresponding to the internal temperature and humidity of the photographic lens.

The control circuit further includes a barometer 27 connected to the processing unit 1, thereby obtaining an electrical signal corresponding to the external environment air pressure of the photographic lens.

Preferably, as shown in FIG. 3, the accelerometer 24 and the gyro sensor 25 are provided by an integrated circuit with a model of ICM20948, and the integrated circuit with a model of ICM20948 additionally provides a magnetometer 28 for the control circuit, which aims for the relatively large quantity of circuits in the photographic lens and a shell that is partially shielded by metal. The control circuit may perform high-precision magnetic field detection and calibration by using the magnetometer 28, to obtain stable motion parameters. In the electrical principle shown in FIG. 3, the solution of using the integrated circuit with a model of ICM20948 is only intended to reveal an improvement solution for adding the magnetometer 28 to the control circuit, rather than limiting the specific model of the integrated circuit.

In the electrical principal diagram shown in FIG. 3, the SMT32L single-chip microcomputer/HC32L series single-chip microcomputer is used as the processing unit 1, the AHT21 chip is used as the temperature and humidity sensor 26, the ICP-10110 chip is used as the barometer 27, and the storage unit 5 is constructed by using the GD25Q64C chip. Similarly, the electrical principle shown in FIG. 3 is only intended to reveal a feasible configuration scheme for the control circuit rather than limit the replaceable circuit structure and replaceable chip type in the control circuit.

Preferably, the control circuit is provided with a multi-stage filter regulator unit 6, and the power connector 4 is connected to a processing system by using the multi-stage filter regulator unit 6. The multi-stage filter regulator unit 6 through multi-stage filtering, shielding, and circuit design ensures smaller power and signal interferences, so that the system performance is increasing stable and reliable.

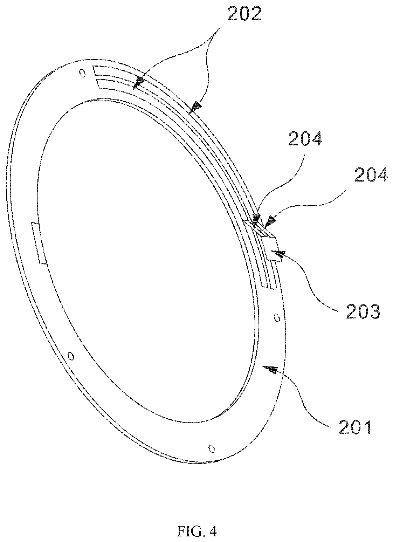

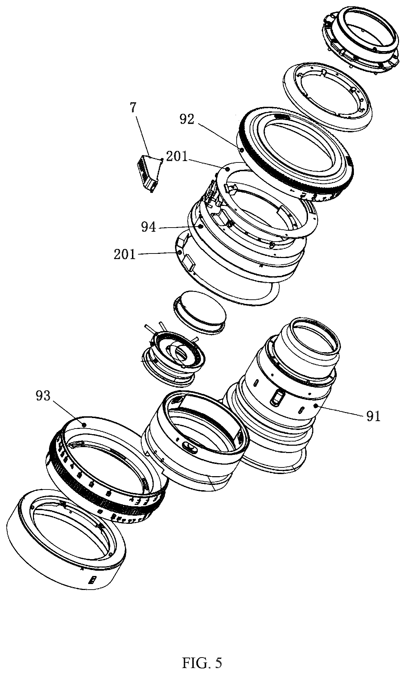

Preferably, as shown in FIG. 4 and FIG. 5, the focusing ring position sensor 21, the zoom ring position sensor 22, and the aperture ring position sensor 23 each include a ring circuit board 201 attached to a lens body 91 in the photographic lens, and the ring circuit boards 201 are connected to the processing unit 1; two carbon film resistors 202 are provided on the ring circuit board 201, the carbon film resistors 202 are set in a fan ring concentrically aligned with the ring circuit board 201, and the two carbon film resistors 202 are provided in parallel and spaced apart in the same fan sector of the ring circuit board 201; the focusing ring position sensor 21, the zoom ring position sensor 22, and the aperture ring position sensor 23 include short-circuit electrodes 203 correspondingly attached to the focusing ring 92, the zoom ring 93, and the aperture ring 94 in the photographic lens, and the short-circuit electrode 203 is provided with two elastic members 204; the elastic members 204 of the short-circuit electrodes 203 in the focusing ring position sensor 21, the zoom ring position sensor 22, and the aperture ring position sensor 23 are in elastic contact with the carbon film resistors 202 on the ring circuit boards 201 in a one-to-one correspondence, and the elastic members 204 slide along circumferences of the carbon film resistors 202; and when the focusing ring 92, the zoom ring 93, and the aperture ring 94 of the photographic lens rotate, the two carbon film resistors 202 on the ring circuit board 201 are configured, by using the short-circuit electrodes 203, as varistors connected to the processing unit 1.

As shown in FIG. 4, the size of the sector, occupied by the carbon film resistors 202, on the ring circuit board 201 is selected obviously according to the rotation ranges of the focusing ring 92, the zoom ring 93, and the aperture ring 93. Further, the processing unit 1, the accelerometer 24, the gyro sensor 25, the temperature and humidity sensor 26, the barometer 27, the magnetometer 28 can be disposed on the ring circuit board 201 of any one of the focusing ring position sensor 21, the zoom ring position sensor 22, and the aperture ring position sensor 23, or can be respectively disposed on the ring circuit boards of the focusing ring position sensor 21, the zoom ring position sensor 22, and the aperture ring position sensor 23.

Preferably, as shown in FIG. 5, the communication interface 3 and the power connector 4 share a physical port 7. The physical port 7 may be fixed on the surface of the photographic lens without affecting the operation of the photographic lens.

## Claims

1. A method for acquiring operating parameters of a photographic lens, comprising: acquiring in the photographic lens, by a control circuit, an operating parameter of a photographic lens, performing data encapsulation, by the control circuit, on the operating parameter of the photographic lens, writing the encapsulated parameter into a storage unit, and transmitting the encapsulated parameter to the camera or an external data reading device in real time,
wherein
the acquiring, by the control circuit, the operating parameter of the photographic lens at least comprises:
(1) obtaining, by the control circuit, electrical signals corresponding to current positions of a focusing ring, a zoom ring, and an aperture ring respectively during rotations, to convert the electrical signals into optical parameters of a focus, a zoom, and an aperture; and
(2) obtaining, by the control circuit, an electrical signal corresponding to a current pose of the photographic lens when the pose of the photographic lens changes, to convert the electrical signal into motion parameters comprising but not limited to a position parameter and a posture parameter;
**characterized in that** the acquiring, by a control circuit, of an operating parameter of a photographic lens further comprises:
obtaining, by the control circuit, electrical signals corresponding to an internal temperature and humidity of the photographic lens, to convert the electrical signals into current internal environment parameters of the photographic lens; and
obtaining, by the control circuit, an electrical signal corresponding to an external environment air pressure of the photographic lens, to convert the electrical signal into current external environment parameter of the photographic lens;
wherein the method further comprises: monitoring, by the control circuit, the current internal environment parameters to the camera or an external data reading device in real time for prevention of the photographic lens from being exposed to relatively high humidity for a long time; providing, by the control circuit, a temperature basis of a temperature compensation algorithm correction for the control circuit based on the internal environment parameters; and providing, by the control circuit, a record of the current external environment air pressure to the camera or an external data reading device in real time for use in digital cinemas to provide audiences when watching movies with a higher-dimensional on-site observation experience.

2. A system for acquiring operating parameters of a photographic lens, comprising: a control circuit and a storage unit (5) that are configured in the photographic lens,
wherein
the control circuit comprises a processing unit (1) and a focusing ring position sensor (21), a zoom ring position sensor (22), an aperture ring position sensor (23), an accelerometer (24), a gyro sensor (25), a communication interface (3), a power connector (4) that are connected to the processing unit (1); wherein the control circuit acquires an operating parameter of the photographic lens by using the focusing ring position sensor (21), the zoom ring position sensor (22), the aperture ring position sensor (23), the accelerometer (24) and the gyro sensor (25), performs data encapsulation on the operating parameter, and writes the encapsulated parameter into the storage unit (5); and the control circuit is further connected to a camera or an external data reading device by using the communication interface (3), to output the operating parameter after the data encapsulation in real time;
**characterized in that**:
the control circuit further comprises a temperature and humidity sensor (26) connected to the processing unit (1), and a barometer (27) connected to the processing unit (1); and
wherein the control circuit is configured for: monitoring the current internal environment parameters to the camera or an external data reading device in real time for prevention of the photographic lens from being exposed to relatively high humidity for a long time; providing a temperature basis of a temperature compensation algorithm correction for the control circuit based on the internal environment parameters; and providing a record of the current external environment air pressure to the camera or an external data reading device in real time for use in digital cinemas to provide audiences when watching movies with a higher-dimensional on-site observation experience.

3. The system for acquiring operating parameters of a photographic lens according to claim 2, wherein the accelerometer (24) and the gyro sensor (25) are provided by an integrated circuit with a model of ICM20948, and the integrated circuit with a model of ICM20948 additionally provides a magnetometer for the control circuit.

4. The system for acquiring operating parameters of a photographic lens according to claim 2, wherein the control circuit is provided with a multi-stage filter regulator unit (6), and the power connector (4) is connected to a processing system by using the multi-stage filter regulator unit (6).

5. The system for acquiring operating parameters of a photographic lens according to claim 2, wherein the focusing ring position sensor (21), the zoom ring position sensor (22), and the aperture ring position sensor (23) each comprise a ring circuit board (201) attached to a lens body (91) in the photographic lens, and the ring circuit boards (201) are connected to the processing unit (1); two carbon film resistors (202) are provided on the ring circuit board (201), the carbon film resistors (202) are set in a fan ring concentrically aligned with the ring circuit board (201), and the two carbon film resistors (202) are provided in parallel and spaced apart in the same fan sector of the ring circuit board (201); the focusing ring position sensor (21), the zoom ring position sensor (22), and the aperture ring position sensor (23) comprise short-circuit electrodes (203) correspondingly attached to the focusing ring (92), the zoom ring (93), and the aperture ring (94) in the photographic lens, and the short-circuit electrode is provided with two elastic members (204); the elastic members (204) of the short-circuit electrodes (203) in the focusing ring position sensor (21), the zoom ring position sensor (22), and the aperture ring position sensor (23) are in elastic contact with the carbon film resistors (202) on the ring circuit board (201)s in a one-to-one correspondence, and the elastic members (204) slide along circumferences of the carbon film resistors (202); and when the focusing ring (92), the zoom ring (93), and the aperture ring (94) of the photographic lens rotate, the two carbon film resistors (202) on the ring circuit board (201) are configured, by using the short-circuit electrodes (203), as varistors connected to the processing unit (1).

6. The system for acquiring operating parameters of a photographic lens according to claim 2, wherein the communication interface (3) and the power connector (4) share one physical port.

## Patentansprüche

1. Verfahren zum Erfassen von Betriebsparametern einer fotografischen Linse, umfassend:
Erfassen, durch eine Steuerschaltung in der fotografischen Linse, eines Betriebsparameters einer fotografischen Linse, Durchführen einer Datenkapselung durch die Steuerschaltung an dem Betriebsparameter der fotografischen Linse, Schreiben des gekapselten Parameters in eine Speichereinheit und Übertragen in Echtzeit des gekapselten Parameters zu der Kamera oder zu einer externen Datenlesevorrichtung,
wobei das Erfassen, durch die Steuerschaltung, des Betriebsparameters der fotografischen Linse mindestens umfasst:
(1) Erhalten, in der Steuerschaltung, von elektrischen Signalen, die aktuellen Positionen eines Fokussierrings, eines Zoomrings bzw. eines Blendenrings während ihrer Drehungen entsprechen, um die elektrischen Signale in optische Parameter eines Fokus, eines Zooms und einer Blende umzuwandeln; und
(2) Erhalten, in der Steuerschaltung, eines elektrischen Signals, das einer aktuellen Stellung der fotografischen Linse entspricht, wenn sich die Stellung der fotografischen Linse ändert, um das elektrische Signal in Bewegungsparameter umzuwandeln, die ohne auf diese beschränkt zu sein, einen Positionsparameter und einen Haltungsparameter umfassen;
**dadurch gekennzeichnet, dass** das Erfassen, durch eine Steuerschaltung, eines Betriebsparameters einer fotografischen Linse ferner umfasst:
Erhalten, in der Steuerschaltung, von elektrischen Signalen, die einer Innentemperatur und einer Feuchtigkeit der fotografischen Linse entsprechen, um die elektrischen Signale in aktuelle interne Umgebungsparameter der fotografischen Linse umzuwandeln; und
Erhalten, in der Steuerschaltung, von elektrischen Signalen, die einem Luftdruck der Außenumgebung der fotografischen Linse entsprechen, um die elektrischen Signale in aktuelle Außenumgebungsparameter der fotografischen Linse umzuwandeln; und
wobei das Verfahren ferner umfasst: Überwachen in Echtzeit, durch die Steuerschaltung, der aktuellen internen Umgebungsparameter für die Kamera oder eine externe Datenlesevorrichtung, um zu verhindern, dass die fotografische Linse für eine lange Zeit einer relativ hohen Feuchtigkeit ausgesetzt wird; Bereitstellen, durch die Steuerschaltung, einer Temperaturbasis für eine Algorithmenkorrektur einer Temperaturkompensation für die Steuerschaltung basierend auf den internen Umgebungsparametern; und Bereitstellen in Echtzeit, durch die Steuerschaltung, einer Aufzeichnung des aktuellen Luftdrucks der Außenumgebung für die Kamera oder eine externe Datenlesevorrichtung für eine Verwendung in digitalen Kinos, um dem Publikum beim Anschauen von Filmen ein Beobachtungserlebnis in einer neuen Dimension vor Ort bereitzustellen.

2. System zum Erfassen von Betriebsparametern einer fotografischen Linse, umfassend: eine Steuerschaltung und eine Speichereinheit (5), die in der fotografischen Linse konfiguriert sind,
wobei die Steuerschaltung eine Verarbeitungseinheit (1) und einen Fokussierringpositionssensor (21), einen Zoomringpositionssensor (22), einen Blendenringpositionssensor (23), einen Beschleunigungsmesser (24), einen Kreiselsensor (25), eine Kommunikationsschnittstelle (3), einen Stromanschluss (4) umfasst, die mit der Verarbeitungseinheit (1) verbunden sind; wobei die Steuerschaltung einen Betriebsparameter der fotografischen Linse unter Verwendung des Fokussierringpositionssensors (21), des Zoomringpositionssensors (22), des Blendenringpositionssensors (23), des Beschleunigungsmessers (24) und des Kreiselsensors (25) erfasst, eine Datenkapselung an dem Betriebsparameter durchführt und den gekapselten Parameter in die Speichereinheit (5) schreibt; und wobei die Steuerschaltung ferner mit einer Kamera oder einer externen Datenlesevorrichtung verbunden ist, indem die Kommunikationsschnittstelle (3) verwendet wird, um den Betriebsparameter nach der Datenkapselung in Echtzeit auszugeben;
**dadurch gekennzeichnet, dass**:
die Steuerschaltung ferner einen Temperatur- und Feuchtigkeitssensor (26), der mit der Verarbeitungseinheit (1) verbunden ist, und ein Barometer (27) umfasst, das mit der Verarbeitungseinheit (1) verbunden ist; und
wobei die Steuerschaltung konfiguriert ist zum:
Überwachen in Echtzeit der aktuellen internen Umgebungsparameter für die Kamera oder eine externe Datenlesevorrichtung, um zu verhindern, dass die fotografische Linse für eine lange Zeit einer relativ hohen Feuchtigkeit ausgesetzt wird; Bereitstellen einer Temperaturbasis für eine Algorithmenkorrektur einer Temperaturkompensation für die Steuerschaltung basierend auf den internen Umgebungsparametern; und Bereitstellen in Echtzeit einer Aufzeichnung des aktuellen Luftdrucks der Außenumgebung für die Kamera oder eine externe Datenlesevorrichtung für eine Verwendung in digitalen Kinos, um dem Publikum beim Anschauen von Filmen ein Beobachtungserlebnis in einer neuen Dimension vor Ort bereitzustellen.

3. System zum Erfassen von Betriebsparametern einer fotografischen Linse nach Anspruch 2, wobei der Beschleunigungsmesser (24) und der Kreiselsensor (25) durch eine integrierte Schaltung mit einem Modell von ICM20948 bereitgestellt werden und wobei die integrierte Schaltung mit einem Modell von ICM20948 zusätzlich ein Magnetometer für die Steuerschaltung bereitstellt.

4. System zum Erfassen von Betriebsparametern einer fotografischen Linse nach Anspruch 2, wobei die Steuerschaltung mit einer mehrstufigen Filterreglereinheit (6) bereitgestellt wird und wobei der Stromanschluss (4) mit einem Verarbeitungssystem verbunden wird, indem die mehrstufige Filterreglereinheit (6) verwendet wird.

5. System zum Erfassen von Betriebsparametern einer fotografischen Linse nach Anspruch 2, wobei der Fokussierringpositionssensor (21), der Zoomringpositionssensor (22) und der Blendenringpositionssensor (23) jeweils eine Ringleiterplatte (201) umfassen, die an einem Linsenkörper (91) in der fotografischen Linse befestigt ist, und wobei die Ringleiterplatten (201) mit der Verarbeitungseinheit (1) verbunden sind; wobei auf der Ringleiterplatte (201) zwei Kohleschichtwiderstände (202) bereitgestellt werden, wobei die Kohleschichtwiderstände (202) in einen Luftleitring eingesetzt sind, der konzentrisch auf die Ringleiterplatte (201) ausgerichtet ist, und wobei die beiden Kohleschichtwiderstände (202) parallel geschaltet und voneinander beabstandet in dem gleichen Luftleitsektor der Ringleiterplatte (201) bereitgestellt werden; wobei der Fokussierringpositionssensor (21), der Zoomringpositionssensor (22) und der Blendenringpositionssensor (23) Kurzschlusselektroden (203) umfassen, die an dem Fokussierring (92), dem Zoomring (93) und dem Blendenring (94) in der fotografischen Linse entsprechend befestigt sind, und wobei die Kurzschlusselektrode mit zwei elastischen Elementen (204) bereitgestellt wird; wobei die elastischen Elemente (204) der Kurzschlusselektroden (203) in dem Fokussierringpositionssensor (21), dem Zoomringpositionssensor (22) und dem Blendenringpositionssensor (23) in einer Eins-zu-Eins-Entsprechung in einem elastischen Kontakt mit den Kohleschichtwiderständen (202) auf der Ringleiterplatte (201) stehen, und wobei die elastischen Elemente (204) entlang der Umfänge der Kohleschichtwiderstände (202) gleiten; und wobei, wenn sich der Fokussierring (92), der Zoomring (93) und der Blendenring (94) der fotografischen Linse drehen, die beiden Kohleschichtwiderstände (202) auf der Ringleiterplatte (201) konfiguriert werden, indem die Kurzschlusselektroden (203) als Varistoren verwendet werden, die mit der Verarbeitungseinheit (1) verbunden sind.

6. System zum Erfassen von Betriebsparametern einer fotografischen Linse nach Anspruch 2, wobei die Kommunikationsschnittstelle (3) und der Stromanschluss (4) einen physischen Anschluss gemeinsam nutzen.

## Revendications

1. Procédé d'acquisition de paramètres de fonctionnement d'un objectif photographique, comprenant :
l'acquisition, dans l'objectif photographique, par un circuit de commande, d'un paramètre de fonctionnement d'un objectif photographique, la réalisation, par le circuit de commande, d'une encapsulation de données sur le paramètre de fonctionnement de l'objectif photographique, l'écriture du paramètre encapsulé dans une unité de stockage, et la transmission en temps réel du paramètre encapsulé à l'appareil photographique ou à un dispositif externe de lecture de données,
l'acquisition, par le circuit de commande, du paramètre de fonctionnement de l'objectif photographique comprenant au moins :
(1) l'obtention, par le circuit de commande, de signaux électriques correspondant respectivement aux positions actuelles d'une bague de mise au point, d'une bague de zoom et d'une bague d'ouverture pendant des rotations, afin de convertir les signaux électriques en paramètres optiques d'une mise au point, d'un zoom et d'une ouverture ; et
(2) l'obtention, par le circuit de commande, d'un signal électrique correspondant à une pose actuelle de l'objectif photographique lorsque la pose de l'objectif photographique varie, afin de convertir le signal électrique en paramètres de mouvement comprenant, entre autres, un paramètre de position et un paramètre de posture ;
**caractérisé en ce que** l'acquisition, par un circuit de commande, d'un paramètre de fonctionnement d'un objectif photographique comprend en outre :
l'obtention, par le circuit de commande, de signaux électriques correspondant à une température interne et à une humidité interne de l'objectif photographique, afin de convertir les signaux électriques en paramètres actuels d'environnement interne de l'objectif photographique ; et
l'obtention, par le circuit de commande, d'un signal électrique correspondant à une pression d'air d'environnement externe de l'objectif photographique, afin de convertir le signal électrique en paramètre actuel d'environnement externe de l'objectif photographique ;
le procédé comprenant en outre : la surveillance en temps réel, par le circuit de commande, des paramètres actuels d'environnement interne pour l'appareil photographique ou à un dispositif externe de lecture de données afin d'empêcher l'exposition de l'objectif photographique à une humidité relativement élevée pendant une longue période ; la fourniture, par le circuit de commande, d'une base de température d'une correction par un algorithme de compensation de température pour le circuit de commande sur la base des paramètres d'environnement interne ; et la fourniture en temps réel, par le circuit de commande, d'un enregistrement de la pression d'air d'environnement externe actuelle à l'appareil photographique ou à un dispositif externe de lecture de données pour une utilisation dans des cinémas numériques afin de fournir aux spectateurs, lorsqu'ils regardent des films, une expérience de visionnage sur place de dimension supérieure.

2. Système d'acquisition de paramètres de fonctionnement d'un objectif photographique, comprenant : un circuit de commande et une unité de stockage (5) qui sont configurés dans l'objectif photographique,
le circuit de commande comprenant une unité de traitement (1) et un capteur de position de bague de mise au point (21), un capteur de position de bague de zoom (22), un capteur de position de bague d'ouverture (23), un accéléromètre (24), un capteur gyroscopique (25), une interface de communication (3), un connecteur d'alimentation (4) qui sont connectés à l'unité de traitement (1) ; le circuit de commande acquérant un paramètre de fonctionnement de l'objectif photographique au moyen du capteur de position de bague de mise au point (21), du capteur de position de bague de zoom (22), du capteur de position de bague d'ouverture (23), de l'accéléromètre (24) et du capteur gyroscopique (25), réalisant une encapsulation de données sur le paramètre de fonctionnement et écrivant le paramètre encapsulé dans l'unité de stockage (5) ; et le circuit de commande étant en outre connecté à un appareil photographique ou à un dispositif externe de lecture de données au moyen de l'interface de communication (3) afin de délivrer en temps réel le paramètre de fonctionnement après l'encapsulation de données ;
**caractérisé en ce que** :
le circuit de commande comprend en outre un capteur de température et d'humidité (26) connecté à l'unité de traitement (1), et un baromètre (27) connecté à l'unité de traitement (1) ; et
le circuit de commande étant configuré pour : surveiller en temps réel les paramètres actuels d'environnement interne pour l'appareil photographique ou à un dispositif externe de lecture de données afin d'empêcher l'exposition de l'objectif photographique à une humidité relativement élevée pendant une longue période ; fournir une base de température d'une correction par un algorithme de compensation de température pour le circuit de commande sur la base des paramètres d'environnement interne ; et fournir en temps réel un enregistrement de la pression d'air d'environnement externe actuelle à l'appareil photographique ou à un dispositif externe de lecture de données pour une utilisation dans des cinémas numériques afin de fournir aux spectateurs, lorsqu'ils regardent des films, une expérience de visionnage sur place de dimension supérieure.

3. Système d'acquisition de paramètres de fonctionnement d'un objectif photographique selon la revendication 2, dans lequel l'accéléromètre (24) et le capteur gyroscopique (25) sont fournis par un circuit intégré de modèle ICM20948, et le circuit intégré de modèle ICM20948 fournit en outre un magnétomètre pour le circuit de commande.

4. Système d'acquisition de paramètres de fonctionnement d'un objectif photographique selon la revendication 2, dans lequel le circuit de commande est pourvu d'une unité de régulation à filtrage multi-étage (6), et le connecteur d'alimentation (4) est connecté à un système de traitement au moyen de l'unité de régulation à filtrage multi-étage (6).

5. Système d'acquisition de paramètres de fonctionnement d'un objectif photographique selon la revendication 2, dans lequel le capteur de position de bague de mise au point (21), le capteur de position de bague de zoom (22) et le capteur de position de bague d'ouverture (23) comprennent chacun une carte de circuit annulaire (201) fixée à un corps d'objectif (91) dans l'objectif photographique, et les cartes de circuit annulaires (201) sont connectées à l'unité de traitement (1) ; deux résistances à film de carbone (202) sont disposées sur la carte de circuit annulaire (201), les résistances à film de carbone (202) sont placées selon un secteur annulaire aligné concentriquement avec la carte de circuit annulaire (201), et les deux résistances à film de carbone (202) sont disposées parallèlement et espacées l'une de l'autre dans le même secteur annulaire de la carte de circuit annulaire (201) ; le capteur de position de bague de mise au point (21), le capteur de position de bague de zoom (22) et le capteur de position de bague d'ouverture (23) comprennent des électrodes de court-circuit (203) fixées de manière correspondante à la bague de mise au point (92), à la bague de zoom (93) et à la bague d'ouverture (94) dans l'objectif photographique, et l'électrode de court-circuit est pourvue de deux éléments élastiques (204) ; les éléments élastiques (204) des électrodes de court-circuit (203) dans le capteur de position de bague de mise au point (21), le capteur de position de bague de zoom (22) et le capteur de position de bague d'ouverture (23) sont en contact élastique avec les résistances à film de carbone (202) sur les cartes de circuit annulaires (201) selon une correspondance biunivoque, et les éléments élastiques (204) glissent le long des circonférences des résistances à film de carbone (202) ; et, lorsque la bague de mise au point (92), la bague de zoom (93) et la bague d'ouverture (94) de l'objectif photographique tournent, les deux résistances à film de carbone (202) sur la carte de circuit annulaire (201) sont configurées, au moyen des électrodes de court-circuit (203), sous la forme de varistances connectées à l'unité de traitement (1).

6. Système d'acquisition de paramètres de fonctionnement d'un objectif photographique selon la revendication 2, dans lequel l'interface de communication (3) et le connecteur d'alimentation (4) partagent un même port physique.
